# EUROPEAN PATENT APPLICATION

(11) **EP 4 768 881 A1**
(43) Date of publication of application: **01.07.2026**
(21) Application number: 25226971.7
(22) Date of filing: 23.12.2025
(51) Int. Cl.: G01M 3/04, G01S 19/14

(54) **METHOD AND SYSTEM FOR SEARCHING FOR WATER LEAKS BASED ON GNSS REFLECTOMETRY MEASUREMENTS**

(30) Priority: 27.12.2024 EP 24223418; 23.07.2025 IT 202500018721
(71) Applicant: Cosmic S.r.l., 04100 Latina (IT)
(72) Inventor: MARCHETTO, Riccardo, 04100 LATINA (IT); MICHELINI, Giuseppe, 04100 LATINA (IT)
(74) Representative: Studio Torta S.p.A.

(57) **Abstract**

A method (2) for searching for leaks in a water network, said method (2) comprising: acquiring data indicative of georeferenced GNSS reflectometry measurements performed in a region of the earth's surface where a water network extends; performing a processing of the acquired data; detecting and locating one or more leaks in the water network based on the processing performed.

## Description

### CROSS-REFERENCE TO RELATED PATENT APPLICATIONS

This application claims the priority of European Patent Application no. 24223418.5 filed on 27 December 2024 and of Italian Patent Application No. 102025000018721 filed on 23 July 2025, the content of which is incorporated herein by reference.

### TECHNICAL FIELD OF THE INVENTION

The present invention relates to searching for leaks in a water network, i.e. a generic network of pipes for the transport and/or distribution and/or conveyance of water. In particular, the present invention relates to a method and a system for searching for leaks in a water network based on scatterometric GNSS reflectometry measurements (where GNSS is the well-known acronym for "Global Navigation Satellite System", i.e. global navigation satellite system).

### STATE OF THE ART

As is known, leaks from a water network, for example an aqueduct, represent a serious problem, both in economic terms, since they cause economic damage to the administration, body or company that manages the network, and from an environmental point of view, since they lead to the waste of a precious natural resource.

A water leak can have several causes, such as, for example, a hole in a pipe, or a damaged stuffing box, or the breakage of a connection joint between pipes, etc. The outflow of water under pressure produces a "sound", or rather a mechanical vibration, with a frequency between 100 and 4000 Hz, which propagates upstream and downstream at a speed that depends, among other things, on the material constituting the pipe, as well as on its diameter, thickness and the operating pressure of the system itself.

Therefore, many of the known methodologies for searching for water leaks are based on the use of instruments that allow the aforesaid sound to be identified, such as geophones or so-called correlators (i.e. electroacoustic equipment that represents an evolution of geophones and that allows a water leak to be located with greater precision).

Moreover, there are also methodologies based on the use of tracer gases, for example an inert gas formed by a mixture of hydrogen (5%) and nitrogen (95%).

Furthermore, for searching for water leaks, the so-called "step tests" are also sometimes used, i.e. special tests (generally carried out at night) which involve a selective search for leaks on individual sectors of the water network (by appropriately closing specific valves).

All the above-mentioned methodologies involve very long search times, are invasive for the end user and, above all, do not provide optimal results, since they do not allow the presence of leaks to be drastically reduced.

Furthermore, the above-mentioned methodologies also involve rather high search costs. For example, assuming a search for water leaks over an area of 100 km² in which there is a water network formed by 500 km of pipes, the above-mentioned search methodologies, which are generally characterized by an average search cost of 150 euros per km, would involve a total search cost of about 75,000 euros.

In recent years, there has been a general improvement in performance (in particular, it has been possible to reduce the time and costs of searching for water leaks) thanks to the use of techniques based on the processing and analysis of images generated by remote sensing systems (typically satellite images) for detecting soil moisture.

For example, Italian Patent No. 102015000039946 describes a method and a system for searching for water leaks of the aforesaid type.

In particular, the method according to 102015000039946 comprises:
a) obtaining georeferencing data of a water network (for example, one or more georeferenced maps of the water network);
b) acquiring, based on the georeferencing data of the water network, images (for example, synthetic aperture radar images, images remotely sensed by optical sensors and/or operating in the thermal infrared spectrum, multispectral and/or hyperspectral images) generated by remote sensing systems (for example, via satellite and/or aerial platforms), wherein the acquired images represent a region of the earth's surface in which said water network extends;
c) processing the acquired images and the georeferencing data of the water network and generating, based on the processing performed, a georeferenced digital map that shows said water network and a soil moisture content in the region in which said water network extends; and
d) detecting and locating one or more leaks in the water network based on the generated georeferenced digital map.

Furthermore, step b) of the method according to 102015000039946 includes acquiring, from at least one database that stores images of the earth's surface generated by remote sensing systems, only images that represent a region of the earth's surface in which the water network extends and that have been remotely sensed under meteorological conditions that satisfy predefined meteorological requirements.

More specifically, said step b) includes:
- selecting, from the images stored on said database which stores images of the earth's surface generated by remote sensing systems, only the images which represent a region of the earth's surface in which the water network extends and which have been remotely sensed under meteorological conditions that satisfy said predefined meteorological requirements, discarding
   - all images which do not represent a region of the earth's surface in which the water network extends and
   - all images that represent a region of the earth's surface where the water network extends and which have been remotely sensed under meteorological conditions that do not satisfy said predefined meteorological requirements; and
- acquiring, from said database that stores images of the earth's surface generated by remote sensing systems, only the selected images.

Going into even more detail, said step b) includes:
- searching, on said database that stores images of the earth's surface generated by remote sensing systems, for images of a region of the earth's surface in which the water network extends; and,
- for each image found,
   - checking, based on data retrieved from one or more meteorological databases, the meteorological conditions of the region in which the water network extends on the date of the remote sensing of said image and
   - acquiring said image only if the meteorological conditions satisfy said predefined meteorological requirements.

Conveniently, according to 102015000039946 it is found that:
- the leaks in the water network are detected and located by performing an analysis of the soil moisture content shown in the georeferenced digital map at, or near to, said water network; and
- said predefined meteorological requirements are indicative of predefined meteorological conditions suitable for performing said analysis of the soil moisture content.

As previously explained, the use of techniques based on the processing and analysis of images generated by remote sensing systems has made it possible to drastically reduce the time and costs of searching for water leaks compared to traditional methodologies. In fact, techniques based on the processing and analysis of images generated by remote sensing systems allow a water network to be monitored remotely in much shorter times than those required for on-site searching carried out by operators along the entire extent of the water network. Furthermore, with such techniques, the use of operators is limited only to the final phase of identifying and repairing the leaks at the geographical locations identified by means of the processing and analysis of the remotely sensed images.

In any case, despite this improvement in performance, today there is still a strong need for new technologies that make it possible to further reduce the time and costs of searching for leaks in a water network.

### OBJECT AND SUMMARY OF THE INVENTION

**In** light of what has been explained above, an object of the present invention is, therefore, to provide a technical solution that makes it possible to further reduce the time and costs of searching for water leaks, increase the reliability and precision of the search, and drastically reduce the presence of leaks in a water network.

Moreover, a further object of the present invention is to provide a technical solution that can be used synergistically with the currently known methodologies/techniques for searching for water leaks.

These and other objects are achieved by the present invention as it relates to a method and a system for searching for leaks in a water network, as defined in the appended claims.

In particular, the present invention relates to a method for searching for leaks in a water network which comprises:
- acquiring data indicative of georeferenced GNSS reflectometry measurements performed in a region of the earth's surface where a water network extends;
- performing processing (which can also be in real time) of the acquired data;
- detecting and locating one or more leaks in the water network based on the processing performed.

Conveniently, the georeferenced GNSS reflectometry measurements are measurements based on an analysis of direct GNSS signals and GNSS signals reflected from the ground.

Preferably:
- acquiring includes also acquiring georeferencing data of the water network;
- performing processing of the acquired data includes generating, based on the processing performed, a georeferenced digital map that represents the water network and a soil moisture content in the region where said water network extends; and
- detecting and locating one or more leaks in the water network includes detecting and locating one or more leaks in the water network based on the generated georeferenced digital map.

Conveniently, performing processing of the acquired data includes estimating the soil moisture content in the region where the water network extends based on data indicative of the georeferenced GNSS reflectometry measurements performed in said region, using measurement correction factors that take into account:
- tropospheric delay;
- ionospheric delay;
- reflectometry geometry;
- Signal-to-Noise Ratio (SNR);
- surface roughness;
- vegetation;
- soil temperature.

More conveniently, performing processing of the acquired data includes estimating the soil moisture content in the region where the water network extends based on data indicative of the georeferenced GNSS reflectometry measurements performed in said region, using measurement correction factors that take into account:
- radial sensitivity and anisotropy effects of the georeferenced GNSS reflectometry measurements performed; and
- effects related to the presence of vegetation.

Preferably, the method further comprises:
- performing GNSS reflectometry measurements at different positions on the earth's surface;
- georeferencing the GNSS reflectometry measurements performed; and
- creating a database containing data indicative of the performed and georeferenced GNSS reflectometry measurements;
wherein acquiring data indicative of georeferenced GNSS reflectometry measurements performed in a region of the earth's surface where the water network extends includes:
- searching said database and selecting, based on the georeferencing data of the water network, data indicative of GNSS reflectometry measurements performed in said region of the earth's surface where said water network extends; and
- acquiring the selected data.

Conveniently, the GNSS reflectometry measurements are performed by means of measuring devices that are installed:
- in a fixed manner in respective positions on the earth's surface; and/or
- on board vehicles and/or aircraft that move/fly over the earth's surface;

wherein each measuring device comprises a respective satellite positioning device to determine, for each GNSS reflectometry measurement performed by said measuring device, a corresponding position in which said measurement is performed;
and wherein georeferencing the GNSS reflectometry measurements performed includes associating, by means of each measuring device, the GNSS reflectometry measurements performed by said measuring device with the corresponding positions determined by the respective satellite positioning device.

Preferably, georeferencing the GNSS reflectometry measurements performed includes associating, by means of each measuring device, each GNSS reflectometry measurement performed by said measuring device:
- to the corresponding position determined by the respective satellite positioning device; and
- to a date and time at which said measurement was performed.

Conveniently, the leaks in the water network are detected and located by performing an analysis of the soil moisture content represented in the georeferenced digital map at, or near to, said water network.

Preferably, the georeferencing data of the water network comprise one or more georeferenced maps of said water network.

Conveniently, the GNSS reflectometry measurements are measurements of the power difference between the direct GNSS signal and the reflected GNSS signal through the scatterometry technique and/or through the definition of a correlation between the SNR signal of the device with an upward-facing antenna and that of the devices with a downward-facing antenna.

### BRIEF DESCRIPTION OF THE DRAWINGS

For a better understanding of the present invention, some preferred embodiments, provided purely by way of an explanatory example, but in no way limiting or binding, will now be illustrated with reference to the accompanying drawings (not to scale), in which:
- Figure 1 schematically illustrates a high-level architecture of a measuring device according to a preferred embodiment of the present invention;
- Figure 2 schematically illustrates a method for searching for leaks in a water network according to a preferred embodiment of the present invention;
- Figure 3 schematically illustrates an example of the operating principle for estimating soil moisture content based on GNSS reflectometry measurements;
- Figure 4 shows an example of a georeferenced digital map generated through the implementation of the method of Figure 2; and
- Figure 5 schematically illustrates a system for searching for leaks in a water network according to a preferred embodiment of the present invention.

### DESCRIPTION OF EMBODIMENTS OF THE INVENTION

The following description is provided to enable a person skilled in the art to understand, make and use the invention. Various modifications to the presented embodiments will be immediately apparent to those skilled in the art and the generic principles disclosed herein may be applied to other embodiments and applications without, however, departing from the scope of protection of the present invention as defined in the appended claims. Therefore, the present invention is to be accorded the broadest scope of protection consistent with what is defined in the claims and what is described and illustrated.

The present invention arises from the Applicant's innovative idea of utilizing GNSS reflectometry measurements to search for and detect leaks in a water network.

The technology and device described below fall into the PNT (acronym for "Positioning, Navigation, and Timing") User Segment category and relate to the application of scatterometric GNSS reflectometry, where research applications have also been found for the monitoring of soil moisture, hereinafter SMC (acronym for "Soil Moisture Content"). Fortunately, in recent decades, satellites have provided an unprecedented opportunity to detect SMC from space and with a wide variety of techniques and sensors - see, for example, the ESA (acronym for "European Space Agency") HydroGNSS mission capable of providing measurements of key hydrological climate variables, including soil moisture, the freeze-thaw state over permafrost, flooding and wetlands, and above-ground biomass, using a technique called Global Navigation Satellite System (GNSS) reflectometry - www.hydrognss.org.

Today, remote sensing is mainly based on optical and radar technologies. However, it is possible to extract further data from the PNT segment, which provide indications for SMC retrieval.

These systems were originally designed for navigation, positioning and time synchronization. Much less conventional and known is the technique which is intended to be used, which exploits the back-scatter electromagnetic wave known as GNSS-R, which is based on GNSS signals reflected from the earth's surface and can be employed to estimate geophysical parameters.

Currently, every day, over 120 satellites, both active and backup, orbit the Earth mainly for positioning purposes, without exploiting the potential of the backscattered signal. The present methodology aims to analyse the reflected GNSS surface waves to assess the SMC through a device specifically designed to perform this task and optimized for receiving the backscattered signals.

The frequencies used by GNSS satellites (mainly L1 at 1575.42 MHz, L2 at 1227.60 MHz, L3 at 1381.05 MHz, L4 at 1379.913 MHz and L5 at 1176.45 MHz) are in the same L-band range as radar satellites for surface and subsurface investigation, such as ALOS 2 (Jaxa) and SAO-COM (CONAE). Therefore, these positioning satellites are capable of generating a signal that can reach the subsurface. Furthermore, of the current 120 satellites, on average about 30-40 can be constantly acquired by receivers, ensuring a continuous flow of signals without incurring further economic or environmental costs due to new launches. The GNSS-R technique shows unprecedented advantages for detecting SMC with high spatial and temporal coverage, at low cost and in all weather conditions. A GNSS-R system has the same geometric configuration properties as a bistatic radar and an important application of GNSS-R is, precisely, the measurement of surface reflectivity, which allows the dielectric properties of the soil to be evaluated and the SMC to be derived.

NASA first added bistatic GPS radar measurements in the Soil Moisture Experiment 2002 (SMEX02) and confirmed that the intensity of the reflected signal has a spatio-temporal correlation with soil moisture. The ESA conducted ground-based and airborne GNSS-R tests in Italy, between March and September 2009 and between July and August 2011, respectively, to acquire the direct right-hand circular polarization (RHCP) signal and the reflected RHCP/left-hand circular polarization (LHCP) signal. The results showed that the ratio between the direct RHCP signal and the reflected LHCP signal can be used as a reliable measure of soil moisture.

Therefore, on the basis of GNSS reflectometry measurements (conveniently, measurements of direct and reflected signals performed at different locations on the earth's surface) it is possible to determine (i.e. estimate) the water content in/on the ground and thus detect the presence of any water leaks.

In fact, having available georeferencing data of a water network (for example, one or more georeferenced maps of the water network), it is possible to:
- generating, based on said georeferencing data of the water network and on data indicative of georeferenced GNSS reflectometry measurements performed in a region of the earth's surface where said water network extends, a georeferenced digital map that shows said water network and a water (or, equivalently, moisture) content of the soil in the region where said water network extends; and, therefore,
- identifying (i.e. detecting) and locating any leaks in the water network based on the georeferenced digital map (conveniently, based on an analysis of the water/moisture content of the soil shown in the georeferenced digital map at, or near to, said water network).

Conveniently, the GNSS reflectometry measurements are performed near the ground to increase the measurement precision (for example, the measurements can be conveniently performed by means of fixed measuring devices and/or measuring devices installed on vehicles/aircraft that move in the region where the water network extends). **In** this regard, it should be noted that as the height above the ground at which the measurements are performed increases, the survey area increases, but the precision of detecting the water content in/on the ground, i.e., the reliability and precision of detecting water leaks, decreases. In any case, it is also important to note that, with the inevitable progress of measurement technologies that will occur in the near future, the height from the ground at which the GNSS reflectometry measurements can be performed could also increase while still guaranteeing a high level of reliability and precision in detecting water leaks (for example, in the future it might be possible to perform the measurements also by means of drones flying at low altitude over the region where the water network extends).

Going into more detail, scatterometric GNSS reflectometry (GNSS-R) is an innovative technique that uses satellite signals from the global navigation satellite system (GNSS) reflected from the ground to analyse the physical properties of the ground itself, in particular to estimate soil moisture. Its application in the environmental, agricultural and water resource management fields is constantly growing, thanks to its ability to provide real-time, low-cost data. Let's see in detail how this principle applied to the estimation of soil moisture works.

### 1. Operating principle of scatterometric GNSS-R

Scatterometric GNSS reflectometry uses GNSS signals which, after being emitted by satellites, interact with the earth's surface and are reflected. One or more receivers on the ground or on board a vehicle or aircraft capture both the direct signal, which comes directly from the satellite, and the reflected signal, which has undergone an interaction with the surface of the ground. The difference between these two signals provides information on the nature and physical properties of the surface of the ground, such as multipath interference, phase difference and delay difference.

The reflected signal contains information that varies according to factors such as the roughness of the ground surface, its composition and, above all, its water content (soil moisture). When the soil is moist, its dielectric properties change and this affects the reflectivity of the signal. In particular, the reflected signal tends to be greater and to change its polarization and phase in the presence of water.

### 2. Key factors of GNSS-R for soil moisture

Reflectivity index: The moisture level in the soil alters the reflectivity index of the ground surface, which is a measure of how much the signal is reflected or absorbed. A soil with high moisture has a different reflectivity index than a dry soil.

Signal-to-Noise Ratio (SNR): The SNR is one of the most important variables in scatterometric GNSS reflectometry. The SNR of the reflected signal changes significantly based on the moisture content of the soil. A detailed analysis of the SNR can reveal variations in soil moisture and the presence of water in water infrastructures.

When the GNSS signal is reflected from a moist surface, the SNR of the reflected signal varies with respect to that from dry surfaces, since the moist ground modifies the signal. This variation can be quantified and used to estimate the moisture content in the soil.

### 3. Bistatic technology and Fresnel zone

GNSS-R is a bistatic system, where the transmitter and receiver are not located at the same point. The transmitter is the orbiting GNSS satellite, while the receiver is installed on the earth's surface or on board drones or vehicles (fixed or mobile station). This type of bistatic geometry is fundamental for analysing the properties of the soil in detail, since the reflected signal carries specific information about the surface with which it has interacted.

The Fresnel zone is the most relevant reflection area, located around the specular reflection point. The size and shape of the Fresnel zone depend on the height of the receiver with respect to the surface and on the angle of incidence of the signal. This zone determines how much the reflected signal is influenced by the soil conditions and, in particular, by the moisture.

### 4. Mathematical modelling for soil moisture

To estimate soil moisture through scatterometric GNSS-R, mathematical models and, conveniently, also machine learning algorithms that analyse the characteristics of the reflected signal are used. The models consider various parameters such as:
- phase variation between the direct and reflected signals;
- variations in the SNR due to reflection on soils with different moisture;
- variation of the polarization of the reflected signal, which changes according to the SMC and the roughness of the soil.

Advanced algorithms, such as Random Forest and neural networks, are capable of processing large volumes of direct and reflected GNSS data and predicting soil moisture with high precision. These algorithms learn from the correlations between the reflected signal data and the actual soil conditions, continuously improving their accuracy.

### 5. Practical applications

Scatterometric GNSS-R can be used for soil moisture monitoring in various contexts, including:
- precision agriculture: it allows real-time monitoring of soil conditions over large areas, optimising irrigation and improving water resource management;
- environmental monitoring: the technology can be used to prevent floods and monitor the water conditions of river basins or aquifers;
- detection of water leaks: installed on vehicles or aircraft, GNSS-R allows water infrastructures to be monitored and underground leaks to be detected in a non-invasive manner;
- detection of ground movements: combined with other instruments such as static GNSS and/or INSAR, it allows for the early identification of landslides;
- detection and/or mapping of targets hidden on the ground (e.g. by tall vegetation), such as waste dumps, bunkers, illegal and/or military installations.

### 6. Advantages of GNSS-R for moisture estimation

Low cost: it uses already available satellite signals, reducing operating costs and environmental impact.

Wide coverage: it can monitor large areas without the need for ground sensors.

Non-invasive: it does not require the installation of physical instruments in the ground.

Continuous monitoring: provides real-time data, ideal for precision agriculture and environmental monitoring.

Transport: the dimensions, the contained weight and the reduced electricity consumption make the system highly transportable, both on normal vehicles and on low-power aircraft such as drones.

### 7. Conclusions

Scatterometric GNSS reflectometry offers a versatile and non-invasive solution for monitoring soil moisture. Thanks to its ability to cover large areas and to provide accurate data in real time, it is an ideal tool for agriculture, water resource management and the prevention of water leaks in infrastructures. Advanced signal analysis techniques and the use of machine learning algorithms further improve the accuracy and effectiveness of this technology.

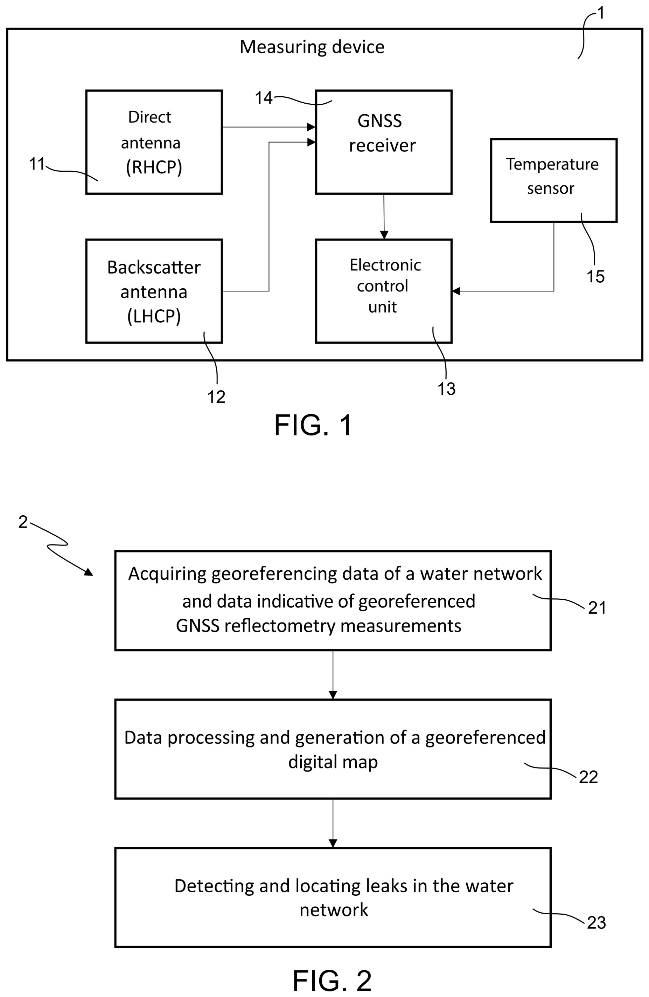

Figure 1 schematically illustrates an example of a high-level architecture of a measuring device (indicated as a whole by 1) according to a preferred (but absolutely non-limiting, nor binding) embodiment of the present invention.

In particular, as shown in Figure 1, the measuring device 1 comprises a direct antenna (RHCP) 11 for receiving direct right-hand circular polarization (RHCP) GNSS signals, a backscatter antenna (LHCP) 12 for receiving left-hand circular polarization (LHCP) GNSS signals reflected from the ground, an electronic control unit 13, a GNSS receiver 14 and, preferably, also a temperature sensor 15 for associating corresponding temperature data with the georeferenced scatterometric GNSS reflectometry measurements performed by the measuring device 1. These components of the measuring device 1 are configured to operate as explained above.

Conveniently, the backscatter antenna (LHCP) 12 is configured to:
- perform measurements of reflected GNSS signals in a predefined energy range; and
- guarantee a constant detection efficiency in said predefined energy range, which makes signal correction factors weighted on different energy levels unnecessary.

Thanks to the use of type 1 measuring devices, it is possible to create one or more databases containing data indicative of the georeferenced scatterometric GNSS reflectometry measurements performed by all the measuring devices 1 used. Conveniently, the database(s) may also comprise data indicative of the date and time of each measurement performed.

For a better understanding of the present invention, Figure 2 schematically illustrates a method for searching for leaks in a water network (indicated as a whole by 2) according to a preferred embodiment of the present invention.

In particular, as shown in Figure 2, the method 2 includes:
- acquiring georeferencing data of a water network and data indicative of georeferenced GNSS reflectometry measurements performed in a region of the earth's surface where said water network extends (block 21);
- performing processing of the acquired data and generating, based on the processing performed, a georeferenced digital map that represents the water network and the soil moisture content in the region where said water network extends (block 22); and
- detecting and locating one or more leaks in the water network based on the generated georeferenced digital map (block 23).

Conveniently, the step of detecting and locating leaks in the water network (block 23) is based on an analysis of the georeferenced digital map, wherein such analysis is aimed at identifying the areas where the water network passes (or which are immediately adjacent to the pipes of the water network) and in which the soil moisture content is high (for example, it is greater than a predefined threshold indicative of, or calculated on the basis of, an average value of the moisture of the surrounding soil and/or an average of the soil moisture values calculated in the past for the same position).

Conveniently, the processing of the data (block 22) includes estimating the soil moisture content (i.e. the amount of water present in the soil) in the region where the water network extends based on the data indicative of the georeferenced GNSS reflectometry measurements performed in said region, using measurement correction factors that conveniently take into account the following variables:
- Tropospheric Delay - the troposphere introduces a delay in GNSS signals due to the variation of the atmospheric refractive index; standard models, such as the Saastamoinen Model, take into account local atmospheric variables (pressure, temperature and humidity) to correct the delay induced by the troposphere;
- Ionospheric Delay - the ionosphere is a layer of the atmosphere located at a higher altitude than the troposphere, where the density of free electrons can cause refraction of the GNSS signal; this ionospheric delay can be significant and must be corrected; a common way to correct for the ionospheric delay is to use dual-frequency GNSS receivers; by comparing the measurements of the L1 and L2 frequencies, it is possible to estimate and correct the delay introduced by the ionosphere;
- Reflectometry Geometry - the geometry of the reflected signal, which depends on the angle of incidence and the height of the receiver with respect to the reflecting surface, directly influences the quality of the moisture measurement; smooth surfaces, such as irrigated or flooded land, reflect the signal more directly than rougher surfaces, such as dry or grassy soil; the size and shape of the Fresnel zone, the area around the specular reflection point, change with the receiver height and the signal angle; the accuracy of the measurements can be improved by correcting for these geometric effects;
- Signal-to-Noise Ratio (SNR) - the signal-to-noise ratio (SNR) of the reflected signal can be influenced by environmental conditions such as wind, surface roughness or the presence of vegetation; these variables affect the quality of the signal and, therefore, the estimation of moisture; advanced filtering algorithms can be used to improve the quality of the signal, removing environmental noise and improving the moisture estimation; techniques such as signal coherence analysis and the Kalman filter can be applied to reduce the impact of noise on the SNR;
- Surface Roughness - the roughness of the soil surface affects the reflection of the signal; rougher surfaces tend to scatter the reflected signal, reducing the accuracy of the measurement; conversely, smooth surfaces reflect the signal more directly; surface roughness simulation models can be used to correct the signal attenuation caused by scattering due to uneven or vegetated terrain;
- Vegetation - the presence of vegetation can significantly attenuate the reflected signal; leaves, branches and other plant elements can absorb part of the GNSS signal, reducing the accuracy of the soil moisture estimation; the integration of models that take into account the presence of vegetation (e.g., NDVI, a normalised vegetation index) can improve the accuracy of GNSS-R measurements in vegetated terrain;
- Soil Temperature - the soil temperature can affect the dielectric properties of the ground and, consequently, the reflectivity of the GNSS signal; warmer soils tend to reflect signals differently than colder soils; soil temperature measurements can be integrated into the moisture estimation process to compensate for variations due to different temperatures.

The measurement correction factors may conveniently also take into account the effects of the radial sensitivity and anisotropy of the performed georeferenced GNSS reflectometry measurements. The radial sensitivity and anisotropy of GNSS reflectometry (GNSS-R) are closely related to soil moisture, as moisture changes the reflective properties of the soil. Let's see how these sensitivities are linked to soil moisture monitoring.

### 1. Link between radial sensitivity and soil moisture

The radial sensitivity refers to the ability to detect variations in the position or height of the reflecting surface. In the context of soil moisture, this variation is related to the dielectric permittivity of the soil.

Dielectric permittivity: a dry soil has a low permittivity (typically 3-5), while a wet soil has a much higher permittivity (typically 15-30, or higher for saturation). The increase in soil moisture therefore causes a variation in the reflectivity of the soil.

Soil reflectivity: the increase in soil moisture changes the reflection coefficient of the GNSS signal. This change results in an alteration of the interference pattern between the direct and reflected signals, which can be detected by GNSS-R receivers.

Practical applications: by monitoring the variation of interference, it is possible to estimate soil moisture on a large scale.

### 2. Link between anisotropy and soil moisture

The anisotropy sensitivity refers to the ability to detect directional variations in the reflective properties of the soil. Moisture affects the reflective anisotropy through the roughness and distribution of water in the ground.

Effects of roughness: a dry soil has a "drier" and more irregular surface roughness, while a wet soil tends to have a more homogeneous surface due to the filling of microcracks with water.

Directional distribution: in agricultural land or land with vegetation cover, the distribution of moisture can be anisotropic (e.g., more water in some areas than in others). GNSS reflectometry can detect these directional variations, which influence the reflectivity of the soil.

### 3. How do they combine?

The combination of radial sensitivity and anisotropy makes it possible to estimate soil moisture more completely.

Radial measurement: provides information on the vertical variation in the reflectivity of the soil, which can be correlated to moisture.

Anisotropic measurement: highlights the non-uniform distribution of moisture on complex surfaces, such as agricultural or wooded land.

### 4. Reflectivity models and GNSS-R

To estimate soil moisture with GNSS-R, models based on:
- the frequency of the GNSS signal (L1, L2, L5), since the sensitivity depends on the wavelength;
- the angle of incidence of the reflected signal: low angles are more sensitive to changes in the permittivity of the ground;
- the temporal correlation between direct and reflected signals: periodic variations can indicate the evolution of soil moisture.

### In summary

GNSS reflectometry is sensitive to soil moisture because:
- radial sensitivity detects variations in the permittivity of the ground caused by moisture;
- the anisotropy sensitivity reflects the distribution and roughness of the ground related to the water content; by combining these measurements, it is possible to monitor soil moisture in near-real time and on a large geographical scale.

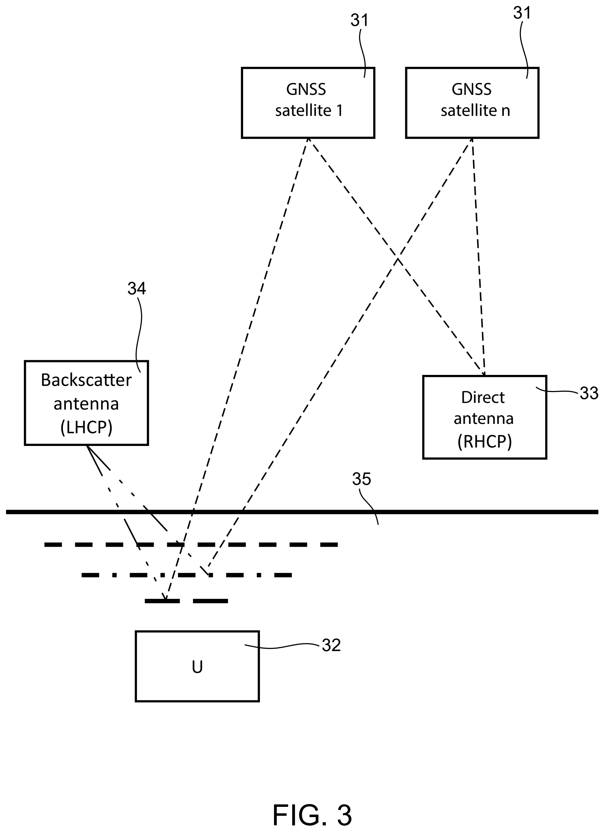

An example of an operating principle that can be used to estimate the moisture content of the soil is schematically illustrated in Figure 3, which shows GNSS signals transmitted by GNSS satellites 31, received directly by a direct antenna (RHCP) 33 and, after reflection on a ground 35, by a backscatter antenna (LHCP) 34. The ground 35 contains a certain amount of moisture U 32 , the estimation of which is obtained from the dielectric constant of the soil. The latter is obtained from the power difference between the direct and reflected GNSS signals and normalised with respect to a reference value M, obtained from measurements performed on dry ground. The moisture value U 32 is then calculated using a physical model that describes the relationship between the dielectric constant and the water content in the soil.

With regard to the data acquisition step (block 21 in Figure 2), the georeferencing data of the water network may conveniently comprise one or more georeferenced maps of said water network. Conveniently, said georeferencing data are provided by the administration/body/company that manages the water network to be inspected. The georeferenced maps of the water network can be provided, for example, in Gauss Boaga 1984 32N or 33N format and conveniently show all the pipes of interest, whether they be main or secondary pipes.

Furthermore, the method 2 conveniently also includes:
- performing GNSS reflectometry measurements (preferably, as explained above, measurements of the power of reflected GNSS signals) at different positions on the earth's surface, wherein said measurements are, as explained above, georeferenced (and, conveniently, also associated with further data indicative of the date and time of execution of the contextually detected measurements); and
- creating one or more databases containing data indicative of the performed georeferenced GNSS reflectometry measurements and, conveniently, also the further data associated with said measurements.

In such case, with reference to the data acquisition step (block 21 in Figure 2), acquiring data indicative of georeferenced GNSS reflectometry measurements conveniently comprises:
- searching on said database(s) and selecting data indicative of GNSS reflectometry measurements performed in a region of the earth's surface where the water network to be inspected extends (i.e. a region corresponding to the georeferencing data (i.e. the geographical coordinates) of said water network); and
- acquiring the selected data.

Furthermore, with regard to the step of generating the georeferenced digital map (block 22 in Figure 2), as explained above, said georeferenced digital map shows the water network together with the moisture (i.e. water) content of the soil (for example, using different colour/intensity levels appropriately scaled and provided with a caption). In this way, graphic representations are obtained which are immediately comprehensible and which also allow a human operator to identify at a glance where any leaks are located.

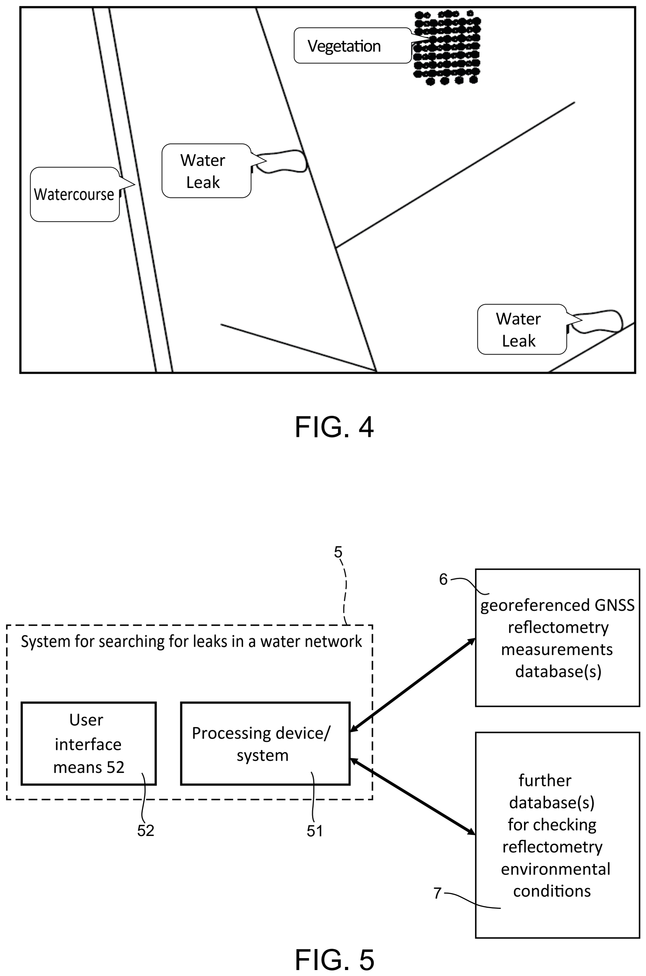

In this regard, Figure 4 shows an example of a georeferenced digital map generated by means of the method 2.

In particular, on the map of Figure 4, which shows a water network and the soil moisture content in the region where said water network extends, the water leaks detected by means of the execution of the method 2 are indicated, as well as other elements identified by processing the GNSS reflectometry measurements (in particular, a watercourse and vegetation).

Thanks to the use of the method 2, it is therefore possible to send an operator to the identified geographical points for a final search on the ground (performed, for example, by means of a geophone) in order to find the leak, or rather to identify the cause of the leak and, therefore, to ensure that it is eliminated.

Conveniently, thanks to the use of method 2, it is also possible to produce a digital document containing the list of the detected leaks accompanied by their respective georeferencing data, in order of severity of the water leak. This document can be conveniently loaded onto special systems installed on board the vehicles of water leak search teams so as to guide, by means of a satellite navigator integrated into such vehicles, the water leak search teams directly to the points where the leaks are located, starting with those of greater severity.

The method 2 can be conveniently implemented by means of a suitable system. In this regard, Figure 5 schematically illustrates a system for searching for leaks in a water network (indicated as a whole by 5) which is designed to perform the method 2, in particular which includes a processing device/system 51 (for example, implemented by means of a computer, a server, a network of computers/servers, or a processing system based on a cloud computing architecture) programmed (by means of one or more suitable software programs) to implement the method 2.

Preferably, the system 5 also includes user interface means 52 designed to allow a user to enter data and/or issue commands (for example, by means of a keyboard and/or a mouse and/or a touch screen and/or a dedicated app) and to display the results of the performed searches, in particular to display on a screen the georeferenced digital maps together with the indication of the identified leaks.

The processing device/system 51 is conveniently configured to connect (for example, via one or more telecommunication networks):
- to one or more databases 6 that store data indicative of georeferenced GNSS reflectometry measurements performed at different locations on the earth's surface, in order to perform the search, selection and acquisition of the data of interest for the search for leaks in a specific water network; and,
- preferably, also to one or more further databases 7 which store data that allow the processing device/system 51 to check the meteorological and/or environmental conditions.

In some advanced configurations, devices for active or passive acquisition of the surrounding environment, such as LiDAR sensors, proximity radar or stereoscopic cameras, or data from three-dimensional digital models of the urban context, may also be integrated. Such information can be used to estimate the geometry of obstacles (for example, buildings or infrastructures) and to determine, for each GNSS satellite, the actual angle of visibility and the probability of spurious reflections. In this way, the system can dynamically select the most reliable reflected signals for the purpose of estimating the soil moisture, reducing the effect of urban multipath.

Furthermore, although not shown in Figure 5, the system 5 may conveniently also comprise a plurality of measuring devices such as antennas and/or other specific sensors, including a high-precision GNSS positioning solution by means of RTK (Real-Time Kinematic) correction, in order to improve the accuracy of the geolocation of the acquired data. This configuration is particularly useful in dynamic contexts or in the case of mobile installations, as well as for the correct spatial alignment of the derived moisture maps, in order to perform the GNSS reflectometry measurements on the earth's surface. In particular, as explained above, such measuring devices may be conveniently installed in a fixed manner in predefined positions and/or on board vehicles (or, more generally, any type of vehicle or means of transport) or aircraft/drones, with a driver/pilot, or with remote or autonomous guidance.

From the preceding description, the innovative characteristics and technical advantages of the present invention are immediately apparent to a person skilled in the art.

In this regard, it is important to emphasize, first of all, the fact that the present invention teaches to exploit, in a totally innovative and inventive way, for a completely new application (i.e. the detection of leaks in water networks), a technology that is now mature, such as the detection of the moisture/water content of the soil based on GNSS reflectometry measurements (in particular, based on the power difference between the direct GNSS signal and the reflected GNSS signal), a technology that until now has been mainly used for applications completely different from the detection of water leaks, such as positioning and navigation.

Furthermore, it is worth drawing attention to the fact that the present invention makes it possible to drastically reduce the time and costs of searching for a water leak compared to the methodologies and techniques currently used. The present invention, in fact, makes it possible to remotely monitor a water network in much shorter times than those necessary for the on-site search carried out by operators along the entire extent of the water network (as previously explained, with the present invention the use of operators is limited only to the final phase of identifying and repairing the leaks at the geographical locations identified through the use, precisely, of the present invention).

More specifically, the present invention makes it possible to reduce the time and costs of searching for water leaks, to increase the reliability and precision of the search and to reduce the presence of leaks in a water network, compared to the methodologies and techniques currently used for searching for water leaks (specifically, the methodologies/techniques based on the use of geophones, correlators, tracer gases, step tests, as well as those based on the processing and analysis of images generated by remote sensing systems). Moreover, the present invention can also be advantageously exploited synergistically with such currently known methodologies/techniques for searching for water leaks.

Furthermore, the present invention also offers the following advantages:
- high reliability and high precision in the identification and localisation of leaks;
- possibility of estimating the size of the identified leaks, as well as predicting potential inconveniences caused by such leaks;
- increase in the speed of response in the identification and classification of leaks with a consequent reduction in the costs of production and distribution of water;
- drastic reduction in the presence of leaks in a water network;
- immediate display of the leaks on a georeferenced digital map;
- no limit to the extent;
- points identified in high resolution (about 5 m);
- non-invasive technology, without contact with the ground and not harmful to the environment;
- no displeasure for the end users;
- measuring devices that can be implemented in different ways (specifically, fixed-type and/or mobile-type measuring devices that can be installed on any means of transport);
- reduction of costs, risks and manpower required to search for and repair pipes;
- reduction of costs for maintenance, for processing, for the products used, etc.;
- reduction of costs for water supply to users;
- short payback period;
- zero bureaucracy.

Finally, referring again to the previous hypothesis of a search for water leaks over an area of 100 km² in which a water network formed by 500 km of pipes is present, attention is drawn to the fact that the present invention in such a case would involve a total cost of 40,000/50,000 euros, with a saving, therefore, of 30/40% compared to the 75,000 euros required with the current search methodologies.

In conclusion, it is important to note that, although the invention described above makes particular reference to very specific embodiments, it is not to be considered limited to said embodiments, with all those variants, modifications or simplifications covered by the appended claims falling within its scope. For example, as previously explained, in order to implement the present invention, GNSS reflectometry techniques other than scatterometry (for example, Delay-Doppler map DDM) could also be conveniently exploited in addition to, or as an alternative to, the scatterometric reflectometry measurements.

Furthermore, in order to perform the GNSS reflectometry measurements, the measuring devices (in addition to the fixed-type ones and those installed on vehicles) could be installed on aircraft, for example drones.

## Claims

1. A method (2) for searching for leaks in a water network, said method (2) comprising:
• acquiring data indicative of georeferenced GNSS reflectometry measurements performed in a region of the earth's surface where a water network extends;
• performing a processing of the acquired data;
• detecting and locating one or more leaks in the water network based on the performed processing.

2. The method of claim 1, wherein the georeferenced GNSS reflectometry measurements are measurements based on an analysis of direct GNSS signals and GNSS signals reflected from the ground.

3. The method according to claim 1 or 2, wherein:
• acquiring includes also acquiring georeferencing data of the water network;
• performing a processing of the acquired data includes generating, based on the performed processing, a georeferenced digital map that represents the water network and a soil moisture content in the region where said water network extends; and
• detecting and locating one or more leaks in the water network includes detecting and locating one or more leaks in the water network based on the generated georeferenced digital map.

4. The method of claim 3, wherein performing a processing of the acquired data includes estimating the soil moisture content in the region where the water network extends based on data indicative of the georeferenced GNSS reflectometry measurements performed in said region, using measurement correction factors that take into account:
• tropospheric delay;
• ionospheric delay;
• reflectometry geometry;
• Signal-to-Noise Ratio (SNR);
• surface roughness;
• vegetation;
• soil temperature.

5. The method according to claim 3 or 4, further comprising:
• performing GNSS reflectometry measurements at different positions on the earth's surface;
• georeferencing the performed GNSS reflectometry measurements; and
• creating a database (6) containing data indicative of the performed and georeferenced GNSS reflectometry measurements;
wherein acquiring data indicative of georeferenced GNSS reflectometry measurements performed in a region of the earth's surface where the water network extends includes:
• searching on said database (6) and selecting, based on the georeferencing data of the water network, data indicative of GNSS reflectometry measurements performed in said region of the earth's surface where said water network extends; and
• acquiring the selected data.

6. The method according to claim 4 or 5, wherein the GNSS reflectometry measurements are performed by means of measuring devices (1) which are installed:
• in a fixed manner in respective positions on the earth's surface; and/or
• on board vehicles and/or aircraft moving/flying over the earth's surface;
wherein each measuring device (1) comprises a respective satellite positioning device (14) to determine, for each GNSS reflectometry measurement performed by said measuring device (1), a corresponding position in which said measurement is performed;
and wherein georeferencing the performed GNSS reflectometry measurements includes associating, by means of each measuring device (1), the GNSS reflectometry measurements performed by said measuring device (1) with the corresponding positions determined by the respective satellite positioning device (14).

7. The method of claim 6, wherein georeferencing the performed GNSS reflectometry measurements includes associating, by means of each measuring device (1), each GNSS reflectometry measurement performed by said measuring device (1):
• to the corresponding position determined by the respective satellite positioning device (14); and
• to a date and time at which said measurement was performed.

8. The method according to any one of claims 3-7, wherein the leaks in the water network are detected and located by performing an analysis of the soil moisture content represented in the georeferenced digital map at, or near to, said water network.

9. The method according to any one of claims 3-8, wherein the georeferencing data of the water network comprises one or more georeferenced maps of said water network.

10. A system (5) configured to perform the method (2) for searching for leaks in a water network as claimed in any one of the preceding claims.

11. A computer program product comprising software code portions which are:
• loadable onto, and executable by, a processing device/system (51); and
• such as to cause, when loaded, said processing device/system (51) to become configured to perform the method (2) for searching for leaks in a water network as claimed in any one of claims 1-9.
